# EUROPÄISCHE PATENTSCHRIFT

(11) **EP 2 236 006 B1**
(45) Veröffentlichungstag und Bekanntmachung des Hinweises auf die Patenterteilung: **02.05.2018**
(21) Anmeldenummer: 09702061.4
(22) Anmeldetag: 02.01.2009
(51) Int. Cl.: H05B 6/12, H05B 6/36

(54) **INDUKTIONSHEIZKÖRPER MIT EINER KREISFÖRMIGEN INDUKTORSPULE**
INDUCTION HEATER COMPRISING A CIRCULAR INDUCTOR COIL
CORPS CHAUFFANT À INDUCTION AVEC UNE BOBINE D'INDUCTEUR CIRCULAIRE

(30) Priorität: 14.01.2008 ES 200800172
(43) Veröffentlichungstag der Anmeldung: 06.10.2010
(73) Patentinhaber: BSH Hausgeräte GmbH, 81739 München (DE)
(72) Erfinder: ACERO ACERO, Jesus, E-50002 Zaragoza (ES); ALONSO ESTEBAN, Rafael, E-22004 Huesca (ES); ARNAL VALERO, Adolfo, E-50009 Zaragoza (ES); BRAULIO MARTINEZ, Ruben, E-50012 Zaragoza (ES); CARRETERO CHAMARRO, Claudio, E-50003 Zaragoza (ES); GARDE ARANDA, Ignacio, E-50012 Zaragoza (ES); HERNANDEZ BLASCO, Pablo Jesus, E-50017 Zaragoza (ES)
(86) Internationale Anmeldenummer: PCT/EP2009/050003
(87) Internationale Veröffentlichungsnummer: WO 2009/090108

(56) Entgegenhaltungen:
- EP-A- 0 561 219
- EP-A- 0 936 843
- EP-A- 1 575 336
- EP-A- 1 742 511
- EP-A2- 0 158 353
- WO-A-89/04109
- DE-A1- 3 731 762

## Beschreibung

Die Erfindung betrifft einen Induktionsheizkörper mit einer kreisförmigen Induktorspule 5 nach dem Oberbegriff des Anspruchs 1 und ein Induktionskochfeld nach dem Oberbegriff des Anspruchs 8.

Aus dem Stand der Technik sind Induktionskochfelder mit Induktionsheizkörpern bekannt. Derartige Induktionsheizkörper haben eine kreisringförmige Induktorspule mit einer kreisförmigen Außenkontur und eine Ferritelemente-Anordnung mit wenigstens einem Ferritelement, die unterhalb der Induktorspule angeordnet ist. Ferritelemente sind in der Regel rechteckig und verlaufen in ihrer Längsrichtung radial, so dass ein radial äußerer Rand der Ferritelemente jeweils geradlinig ist und senkrecht zur radialen Richtung des Induktionsheizkörpers verläuft.

Bei der Formgebung der Ferritelemente wurde das Augenmerk bisher insbesondere darauf gerichtet, eine möglichst vollständige Überdeckung der Fläche einer kreisförmigen Induktorspule zu erreichen, um so eine besonders effektive Magnetfeld-Rückführungs- und Abschirmfunktion der Ferritelemente-Anordnung zu erreichen.

Ferner ist es bekannt, sogenannte Matrix-Induktionskochfelder mit einer besonders großen Zahl von Induktionsheizkörpern mit einem vergleichsweise geringen Durchmesser auszustatten, die in einem quadratischen oder hexagonalen Raster angeordnet sind und eine Fläche des Induktionskochfelds mit einer besonders hohen Packungsdichte möglichst vollständig überdecken. Die Induktionsheizkörper sind dann dicht nebeneinander angeordnet, so dass die von den jeweiligen Induktorspulen erzeugten Magnetfelder durch die benachbarten Induktorspulen und/oder Ferritelemente stark beeinflusst werden.

Die EP0158353 A2 beschreibt einen elektrischen Brenner mit einer kreisförmigen Spule und einem kreisförmigen Ferritträger mit mehreren Auswölbungen auf seinem Umfang.

Der Erfindung liegt die Aufgabe zugrunde, eine Form des Ferritelements eines Induktionsheizkörpers im Hinblick auf ein funktionales und konstruktives Zusammenspiel mit benachbarten Induktionsheizelementen zu optimieren.

Die Aufgabe wird gelöst durch die Merkmale der unabhängigen Patentansprüche. Vorteilhafte Ausgestaltungen und Weiterbildungen der Erfindung ergeben sich aus den Unteransprüchen.

Die Erfindung geht insbesondere aus von einem Induktionsheizkörper mit einer kreisringförmigen Induktorspule mit einer kreisförmigen Außenkontur sowie mit einer Ferritelemente-Anordnung. Die Ferritelemente-Anordnung umfasst wenigstens ein Ferritelement mit einem radial äußeren Rand.

Um eine Rotationssymmetrie des von dem Induktionsheizkörper erzeugten Magnetfelds gezielt zu brechen und sowohl die Form des Magnetfelds als auch die Form des Induktionsheizkörpers im Hinblick auf eine konstruktive und funktionale Wechselwirkung mit benachbarten Induktionsheizkörpern flexibel zu gestalten, wird vorgeschlagen, dass der äußere Rand des Ferritelements zumindest in einem Krümmungspunkt stärker gekrümmt ist als die Außenkontur der Induktorspule und der Krümmungspunkt ein innerer Punkt des radial äußeren Rands ist, um das von der Induktionsspule erzeugte Magnetfeld in einer Umgebung dieses Krümmungspunkts gezielt zu modifizieren. Das Magnetfeld kann insbesondere in dem Krümmungspunkt gebündelt werden, und die Form des Induktionsheizkörpers und des Magnetfelds kann an die unmittelbare Umgebung des Induktionsheizkörpers angepasst werden. Ferner kann dadurch ein hoher Überdeckungsgrad der Ferritelemente realisiert werden. Als "äußerer Rand" soll insbesondere ein Teil einer konvexen Hüllkurve, d.h. der Randkurve der konvexen Hülle der Ferritelemente-Anordnung, bezeichnet werden. Das Ferritelement hat eine zentrale Öffnung. Sein konvexer, radial äußere Rand hat die Form eines regelmäßigen Polygons, die konzentrisch zu der Induktorspule verläuft

Eine besonders große Flächenüberdeckung des Ferritelements kann erreicht werden, wenn der radial äußere Rand des Ferritelements die kreisförmige Außenkontur der Induktorspule in einer Umgebung des Krümmungspunkts radial überragt.

Eine vollflächige Überdeckung der Induktorspule durch das Ferritelement bei einer gleichzeitig geringen Bauteilvielfalt kann erreicht werden, wenn das Ferritelement im Wesentlichen die Form eines offenen Kreisrings mit einer von der Kreisform abweichenden Außenkontur hat. In diesem Fall umfasst die Ferritelemente-Anordnung insbesondere nur ein einziges Ferritelement in dieser Form.

Ferner wird vorgeschlagen, dass der radial äußere Rand des Ferritelements im Wesentlichen die Form eines regelmäßigen Sechsecks hat. Dadurch kann die Form des Induktionsheizkörpers in einem hexagonalen bzw. wabenartigen Gitter oder Raster an die benachbarten Induktionsheizkörper angepasst werden, und es kann ein hoher Überdeckungsgrat der Kochfläche durch die Ferritelemente realisiert werden. Die Ferritelemente können mit geringem Verschnitt aus einem Flachmaterial herausgeschnitten bzw. herausgestanzt werden.

Wenn die Öffnung des Kreisrings zur Führung von Versorgungskabeln der Induktorspule ausgelegt ist, also die geeignete Abmessung zur Führung der Versorgungskabel hat, kann ein flach bauender und kompakter Induktionsheizkörper realisiert werden. Die Öffnung kann ferner zur Führung von Versorgungskabeln bzw. von Auslesekabeln eines im Zentrum des Induktionsheizkörpers angeordneten Temperatursensors dienen.

Wenn der radial äußere Rand des Ferritelements im Wesentlichen die Form eines regelmäßigen Polygons hat und konzentrisch zu der Induktionsspule verläuft, kann allgemein ein homogenes Magnetfeld bzw. ein homogene Heizleistung der Induktionsheizkörperanordnung mit vergleichsweise geringem Materialaufwand realisiert werden, da die Eigenschaften eines polygonalen Ferritelements den Eigenschaften eines kreisförmigen Ferritelements, dessen Außenkontur einem Umkreis des Polygons entspricht, gleichen, das polygonale Ferritelement aber mit einem geringeren Materialaufwand herstellbar ist.

Ein hoher Flächenüberdeckungsgrad der Ferritelemente kann erreicht werden, wenn der radial äußere Rand des Ferritelements die Außenkontur der Induktorspule umschließt. Insbesondere kann die Außenkontur einen Inkreis der Sechseckform des Ferritelements bilden.

Ein weiterer Aspekt der Erfindung betrifft ein Induktionskochfeld mit einer Mehrzahl von in einem Raster angeordneten Induktionsheizkörpern, insbesondere von Induktionsheizkörpern der oben beschriebenen Art. Insbesondere betrifft die Erfindung Induktionskochfelder vom Matrix-Typ, wobei wenigstens ein erster Induktionsheizkörper vollständig von wenigstens vier benachbarten Induktionsheizkörpern umgeben ist. Wenn das Raster hexagonal bzw. wabenartig gestaltet ist, kann der Induktionsheizkörper von sechs benachbarten Induktionsheizkörpern umgeben sein.

Es wird vorgeschlagen, dass eine konvexe Hüllkurve der Ferritelemente-Anordnung wenigstens des ersten Induktionsheizkörpers Extrema aufweist, die gleichmäßig verteilt über den Umfang des Induktionsheizkörpers angeordnet sind. Dabei entspricht eine Symmetrie der Verteilung der Extrema einer Symmetrie des Rasters. Insbesondere weist die konvexe Hüllkurve der Ferritelemente-Anordnung wenigstens des ersten Induktionsheizkörpers in Schnittpunkten mit Verbindungsgeraden zwischen dem Mittelpunkt des ersten Induktionsheizkörpers und den Mittelpunkten der benachbarten Induktionsheizkörper jeweils ein radiales Maximum oder Minimum auf. Ein sehr hoher Flächenüberdeckungsgrad der Ferritelemente kann erreicht werden, wenn die Ferritelemente-Anordnung eine Sechskantsymmetrie aufweist und insbesondere wenn das Raster ein Wabenraster ist. Auch hier bezeichnet der Begriff "konvexe Hüllkurve" die kleinste mögliche geschlossene Kurve, die alle Ferritelemente umschließt und dabei konvex ist.

Weitere Vorteile ergeben sich aus der folgenden Figurenbeschreibung. Die Figuren zeigen Ausführungsbeispiele der Erfindung. Die Zeichnung, die Beschreibung und die Ansprüche enthalten zahlreiche Merkmale in Kombination. Der Fachmann wird im Rahmen der geltenden Patentansprüche die Merkmale zweckmäßigerweise auch einzeln betrachten und zu sinnvollen weiteren Kombinationen zusammenfassen.

Es zeigen:
Fig. 1 ein Matrix-Induktionskochfeld mit zwei Kochgeschirrelementen in einer schematischen Darstellung,
Fig. 2 einen Induktionsheizkörper eines Matrix-Induktionskochfelds mit einem sechseckigen Ferritelement in einer Ansicht von schräg oben,
Fig. 2a zeigt das Ferritelement aus Fig. 2 in einer perspektivischen Ansicht,
Fig. 3 den Induktionsheizkörper aus Fig. 2 in einer Ansicht von schräg unten,
Fig. 4 den Induktionsheizkörper aus den Fig. 2 und 3 in einer Explosionsdarstellung,
Fig. 5 ein Induktionskochfeld mit sechseckigen Induktionsheizkörpern, die in einem hexagonalen Raster angeordnet sind, nach einer ersten Ausgestaltung der Erfindung,
Fig. 6 ein Induktionskochfeld mit hexagonalen Induktionsheizkörpern in einem hexagonalen Raster nach einer zweiten Ausgestaltung der Erfindung und
Fig. 7 eine schematische Darstellung zu einer modularen Bauweise des Induktionskochfelds aus Fig. 6.

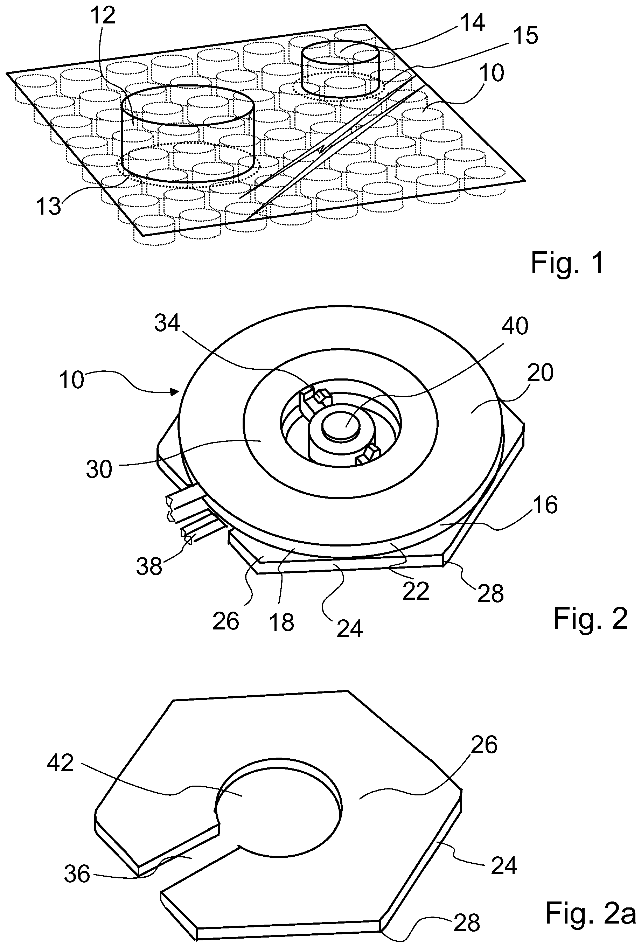

Fig. 1 zeigt schematisch ein Induktionskochfeld vom Matrix-Typ mit Induktionsheizkörpern 10, die in diesem Ausführungsbeispiel in einem rechtwinkligen Raster angeordnet sind. Das Induktionskochfeld umfasst eine hier nicht dargestellte Steuerelektronik, die automatisch Kochgeschirrelemente 12, 14 auf dem Induktionskochfeld detektiert und Induktionsheizkörper 10, die teilweise oder vollständig von einem der Kochgeschirrelemente 12, 14 überdeckt sind, zu einer Heizzone 13, 15 zusammenfasst und zum Beheizen des jeweiligen Kochgeschirrelements 12, 14 nutzt.

Fig. 2 zeigt einen Induktionsheizkörper 10 in einer Ansicht von schräg oben. Der Induktionsheizkörper 10 umfasst eine kreisringförmige Induktorspule 16, die an ihrer Oberseite und Unterseite jeweils von einem Glimmer-Blatt 18, 20 bedeckt und isoliert ist. Die Induktorspule 16 hat eine kreisförmige Außenkontur 22, die einen Innenkreis eines radial äußeren Rands 24 eines Ferritelements 26 bildet. Der radial äußere Rand 24 des Ferritelements 26 hat bis auf einen Durchbruch die Form eines gleichmäßigen Sechsecks mit leicht abgerundeten Ecken, die jeweils einen Krümmungspunkt 28 bilden, in welchem der äußere Rand 24 wesentlich stärker gekrümmt ist als die Außenkontur 22 der Induktorspule 16, wobei der Krümmungspunkt 28 ein innerer Punkt des radial äußeren Rands 24 ist.

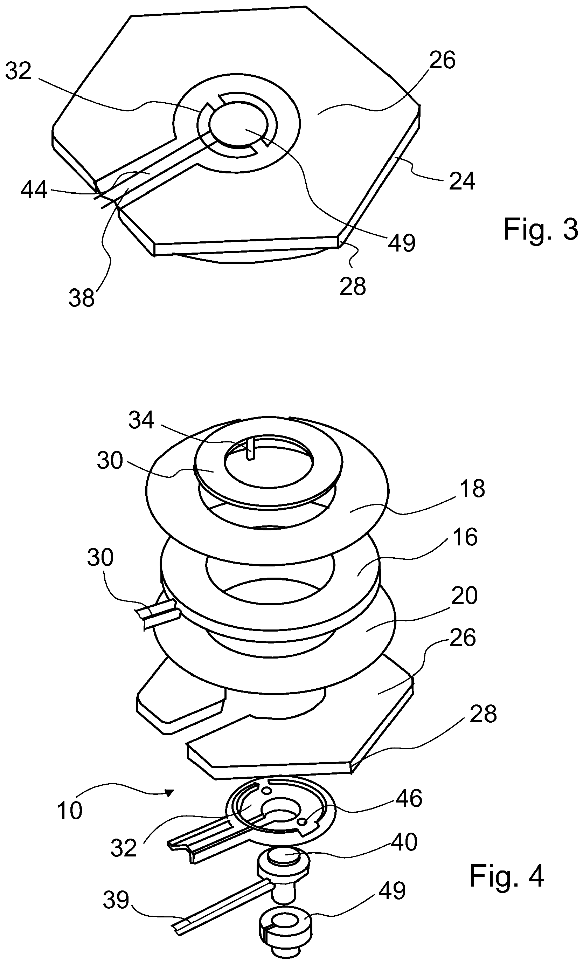

Das Ferritelement 26 und die Induktorspule 16 sind lösbar über zwei zusammenwirkende Verbindungselemente 30, 32 (Figur 4) aus Kunststoff miteinander verbunden. Die Verbindungselemente 30, 32 greifen jeweils in kreisförmige, zentrische Öffnungen der Induktorspule 16 und des Ferritelements 26 ein und sind über Rastelemente 34 miteinander verbunden, so dass die Verbindungselemente 30, 32 die Induktorspule 16 und das Ferritelement 26 miteinander verspannen bzw. verklemmen.

In den Krümmungspunkten 28, die Ecken oder Scheitelpunkte von konvexen Rundungen des äußeren Rands 24 des Ferritelements 26 sein können, wird das von dem Induktionsheizkörper 10 erzeugte Magnetfeld gezielt modifiziert. Der radial äußere Rand 24 des Ferritelements 26 überragt die kreisförmige Außenkontur 22 der Induktionsspule 16 im Wesentlichen über den gesamten Umfang des Induktionsheizkörpers 10. Das Gleiche gilt für die Krümmungspunkte 28 des radial äußeren Rands 24 des Ferritelements 26.

Fig. 2a zeigt das Ferritelement 26 aus Fig. 2 in einer perspektivischen Ansicht. Das Ferritelement 26 hat im Wesentlichen die Form eines offenen Kreisrings mit einem im Wesentlichen, d.h. bis auf eine kleine Öffnung 36, sechseckförmigen äußeren Rand 24. Die Öffnung 36 des Kreisrings ist zur Führung von Versorgungskabeln 38 der Induktorspule 16 bzw. zur Führung von Kabeln 39 (Figur 4) zum Betreiben und Auslesen eines Temperatursensors 40 ausgelegt. Der Temperatursensor 40 wird in der zentralen Öffnung 42 des Ferritelements 26 durch die Verbindungselemente 30, 32 gehalten. Die Form der zentralen Öffnung 42 des Ferritelements 26 entspricht der Form und Größe einer zentralen, kreisförmigen Öffnung der Induktorspule 16.

Durch die kreisringförmige Form der Induktorspule 16 können im Vergleich zu Induktorspulen mit einer von der Kreisform abweichenden Form Variationen des Krümmungsradius von hier nicht dargestellten Wicklungsdrähten der Induktorspule 16 über deren Umfang vermieden werden. In Bereichen mit stärkerer Krümmung neigen solche nicht kreisförmigen Induktorspulen zur Überhitzung, was zu Beschädigungen führen kann.

Fig. 3 zeigt das Induktionsheizelement 10 aus Fig. 2 in einer Ansicht von schräg unten. Es ist erkennbar, dass an das untere Verbindungselement 32 ein in der Öffnung 36 des Ferritelements 26 angeordneter Kabelkanal 44 zum Führen des Versorgungskabels 38 angegossen ist.

Fig. 4 zeigt den Induktionsheizkörper 10 in einer Explosionsdarstellung. Zum Verbinden der Bauteile müssen die Rastelemente 34 in Löcher 46 des unteren Verbindungselements 32 eingesteckt und verrastet werden. Die Montage des Induktionsheizkörpers 10 ist daher besonders einfach und werkzeugfrei durchführbar. Fig. 4 trägt ferner ein Gummielement 49 zum Halten des Temperatursensors 40.

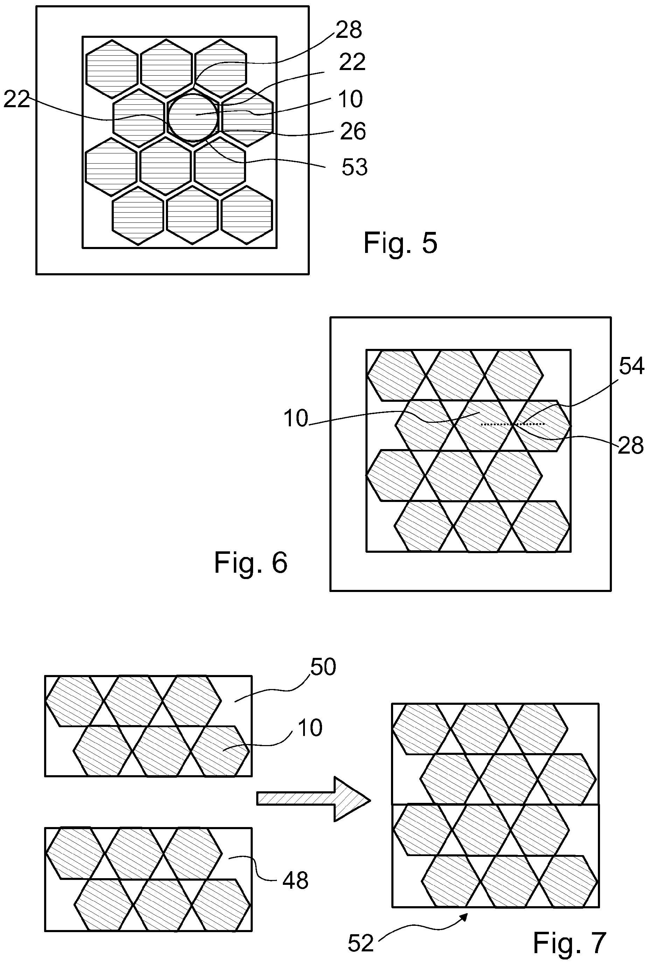

Fig. 5 zeigt ein Induktionskochfeld mit einer Vielzahl von wabenartig angeordneten Induktionsheizkörpern 10 der oben beschriebenen Art. Die mittleren Induktionsheizkörper 10 sind jeweils vollständig von sechs benachbarten Induktionsheizkörpern umgeben.

Die im Wesentlichen von dem äußeren Rand 24 gebildete konvexe Hüllkurve der nur aus jeweils einem Ferritelement 26 bestehenden Ferritelemente-Anordnung der Induktionsheizkörper 10 hat die Form eines regelmäßigen Sechsecks. Sie weist jeweils sechs isotrop über den Umfang des Ferritelements 26 verteilte Maxima und sechs isotrop über den Umfang des Ferritelements 26 verteilte Minima auf. Die Maxima entsprechen den Krümmungspunkten 28 bzw. den Ecken des Sechsecks und die Minima entsprechen den Seitenmitten 53 des Sechsecks. Eine Symmetrie der Verteilung der Extrema entspricht daher einer Symmetrie des Sechseck-Rasters des Induktionskochfelds.

In dem in Fig. 5 dargestellten Ausführungsbeispiel sind die Induktionsheizkörper 10 so angeordnet, dass sich insgesamt eine Wabenstruktur ergibt und dass die benachbarten Seiten von benachbarten Induktionsheizkörpern 10 parallel mit einem Abstand von wenigen Zentimeter, beispielsweise etwa 1-2 cm, verlaufen.

Dadurch kann ein hoher Überdeckungsgrad der Fläche des Induktionskochfelds durch die Ferritelemente 26 erreicht werden.

Fig. 6 zeigt ein weiteres Ausführungsbeispiel der Erfindung, in welchem die Induktionsheizkörper so angeordnet und orientiert sind, dass die Ecken des sechseckigen äußeren Rands 24 der Ferritelemente 26 einander zugewandt sind bzw. dass die Krümmungspunkte 28 auf Verbindungsgeraden zwischen den Mittelpunkten benachbarter Induktionsheizkörper 10 liegen. Die konvexe Hüllkurve der Ferritelemente-Anordnung hat demnach in diesen Punkten jeweils ein radiales Maximum.

Die in Fig. 6 dargestellte Anordnung der Induktionsheizkörper 10 hat konstruktive Vorteile. Wie in Fig. 7 dargestellt, können in einer einfachen Weise zwei gleichartige Module 48, 50 mit jeweils beispielsweise sechs Induktionsheizkörpern 10 zu einem Kochfeld 52 zusammengefügt werden. Die Module 48, 50 können daher flexibel für Kochfelder von unterschiedlicher Größe und Form verwendet werden.

Der allgemeine Erfindungsgedanke ist selbstverständlich nicht auf die oben beschriebenen Ausführungsbeispiele beschränkt, sondern durch die beigefügten Patentansprüche definiert. Beispielsweise können anstatt einteiligen Ferritelemente-Anordnungen auch Ferritelemente-Anordnungen mit mehreren Ferritelementen verwendet werden und anstatt der Öffnung 36 in dem Ferritelement 26 kann eine Rille vorgesehen werden.

### Bezugszeichen

- 10: Induktionsheizkörper
- 12: Kochgeschirrelement
- 13: Heizzone
- 14: Kochgeschirrelement
- 15: Heizzone
- 16: Induktorspule
- 18: Glimmer-Blatt
- 20: Glimmer-Blatt
- 22: Außenkontur
- 24: Rand
- 26: Ferritelement
- 28: Krümmungspunkt
- 30: Verbindungselement
- 32: Verbindungselement
- 34: Rastelemente
- 36: Öffnung
- 38: Versorgungskabel
- 39: Kabel
- 40: Temperatursensor
- 42: Öffnung
- 44: Kabelkanal
- 46: Loch
- 48: Modul
- 49: Gummielement
- 50: Modul
- 52: Kochfeld
- 53: Seitenmitte
- 54: Verbindungsgerade

## Patentansprüche

1. Induktionsheizkörper mit einer kreisringförmigen Induktorspule (16) mit einer kreisförmigen Außenkontur (22) und einer Ferritelemente-Anordnung mit wenigstens einem Ferritelement (26) mit einem radial äußeren Rand (24), wobei der radial äußere Rand (24) des Ferritelements (26) zumindest in einem Krümmungspunkt (28) stärker gekrümmt ist als die Außenkontur (22) der Induktorspule (16) und der Krümmungspunkt (28) ein innerer Punkt des radial äußeren Rands (24) ist,
**dadurch gekennzeichnet, dass**
das Ferritelement (26) eine zentrale Öffnung aufweist und der konvexe, radial äußere Rand (24) des Ferritelements (26) die Form eines regelmäßigen Polygons hat, die konzentrisch zu der Induktorspule (16) verläuft.

2. Induktionsheizkörper nach Anspruch 1, **dadurch gekennzeichnet, dass** der radial äußere Rand (24) des Ferritelements (26) die kreisförmige Außenkontur (22) der Induktorspule (16) in einer Umgebung des Krümmungspunkts (28) radial überragt.

3. Induktionsheizkörper nach Anspruch 1, **dadurch gekennzeichnet, dass** der radial äußere Rand (24) des Ferritelements (26) im Wesentlichen die Form eines regelmäßigen Sechsecks hat.

4. Induktionsheizkörper nach Anspruch 1 oder 3, **dadurch gekennzeichnet, dass** eine Öffnung (42) des Kreisrings zur Führung von Versorgungskabeln (38) der Induktorspule (16) ausgelegt ist.

5. Induktionsheizkörper nach einem der vorhergehenden Ansprüche, **dadurch gekennzeichnet, dass** der radial äußere Rand (24) des Ferritelements (26) die Außenkontur (22) der Induktorspule (16) umschließt.

6. Induktionskochfeld mit einer Mehrzahl von in einem Raster angeordneten Induktionsheizkörpern (10) nach einem der vorhergehenden Anspruche, wobei wenigstens ein erster Induktionsheizkörper (10) vollständig von wenigstens vier benachbarten Induktionsheizkörpern umgeben ist, **dadurch gekennzeichnet, dass** eine konvexe Hüllkurve der Ferritelemente-Anordnung wenigstens des ersten Induktionsheizkörpers (10) mehrere Krümmungspunkt (28) mit stärkerer Krümmung aufweist, die Extrema bilden, die gleichmäßig verteilt über den Umfang des Induktionsheizkörpers (10) angeordnet sind, wobei eine Symmetrie der Verteilung einer Symmetrie des Rasters entspricht.

7. Induktionskochfeld nach Anspruch 6, **dadurch gekennzeichnet, dass** die konvexe körpers (10) in Schnittpunkten mit Verbindungsgeraden (54) zwischen dem Mittelpunkt des ersten Induktionsheizkörpers und den Mittelpunkten der benachbarten Induktionsheizkörper jeweils ein radiales Maximum aufweist.

8. Induktionskochfeld einem der Anspruche 6 und 7, **dadurch gekennzeichnet, dass** die konvexe Hüllkurve der Ferritelemente-Anordnung eine Sechskantsymmetrie aufweist.

## Claims

1. Induction heating element having a circular inductor coil (16) with a circular outer contour (22) and a ferrite element arrangement having at least one ferrite element (26) with a radially outer edge (24), wherein the radially outer edge (24) of the ferrite element (26) is curved to a greater degree at least at one curvature point (28) than the outer contour (22) of the inductor coil (16), and the curvature point (28) is an inner point of the radially outer edge (24),
**characterised in that**
the ferrite element (26) has a central opening and the convex, radially outer edge (24) of the ferrite element (26) has the shape of a regular polygon, which runs concentrically in relation to the inductor coil (16).

2. Induction heating element according to claim 1, **characterised in that** the radially outer edge (24) of the ferrite element (26) projects radially beyond the circular outer contour (22) of the inductor coil (16) in an area around the curvature point (28).

3. Induction heating element according to claim 1, **characterised in that** the radially outer edge (24) of the ferrite element (26) has essentially the shape of a regular hexagon.

4. Induction heating element according to claim 1 or 3, **characterised in that** an opening (42) in the circular ring is designed for the passage of supply cables (38) to the inductor coil (16).

5. Induction heating element according to one of the preceding claims, **characterised in that** the radially outer edge (24) of the ferrite element (26) encloses the outer contour (22) of the inductor coil (16).

6. Induction hob having a number of induction heating elements (10), according to one of the preceding claims, disposed in a grid, wherein at least one first induction heating element (10) is completely surrounded by at least four adjacent induction heating elements, **characterised in that** a convex envelope curve of the ferrite element arrangement of at least the first induction heating element (10) has a number of curvature points (28) with a significant curvature, which form extremes that are evenly distributed over the periphery of the induction heating element (10), wherein a symmetry of the distribution corresponds to a symmetry of the grid.

7. Induction hob according to claim 6, **characterised in that** the convex element (10) has a radial maximum in each instance at intersections with connecting straight lines (54) between the centre point of the first induction heating element and the centre points of the adjacent heating elements.

8. Induction hob according to one of claims 6 and 7, **characterised in that** the convex envelope curve of the ferrite element arrangement has a hexagon symmetry.

## Revendications

1. Élément chauffant à induction avec une bobine d'inducteur circulaire (16) ayant un contour extérieur circulaire (22) et un ensemble d'éléments en ferrite comprenant au moins un élément en ferrite (26) ayant un bord radialement extérieur (24), le bord radialement extérieur (24) de l'élément en ferrite (26) présentant, au moins en un point de courbure (28), une courbure plus forte que le contour extérieur (22) de la bobine d'inducteur (16) et le point de courbure (28) étant un point intérieur du bord radialement extérieur (24),
**caractérisé en ce que**
l'élément en ferrite (26) présente une ouverture centrale et le bord radialement extérieur (24) convexe de l'élément en ferrite (26) a la forme d'un polygone régulier s'étendant concentriquement à la bobine d'inducteur (16).

2. Élément chauffant à induction selon la revendication 1, **caractérisé en ce que** le bord radialement extérieur (24) de l'élément en ferrite (26) dépasse radialement le contour extérieur circulaire (22) de la bobine d'inducteur (16) dans l'environnement du point de courbure (28).

3. Élément chauffant à induction selon la revendication 1, **caractérisé en ce que** le bord radialement extérieur (24) de l'élément en ferrite (26) a essentiellement la forme d'un hexagone régulier.

4. Élément chauffant à induction selon la revendication 1 ou 3, **caractérisé en ce qu'**une ouverture (42) du cercle est conçue pour guider des câbles d'alimentation (38) de la bobine d'inducteur (16).

5. Élément chauffant à induction selon l'une des revendications précédentes, **caractérisé en ce que** le bord radialement extérieur (24) de l'élément en ferrite (26) entoure le contour extérieur (22) de la bobine d'inducteur (16).

6. Plaque de cuisson à induction avec une pluralité d'éléments chauffants à induction (10) selon l'une des revendications précédentes, disposés dans un quadrillage, au moins un premier élément chauffant à induction (10) étant entièrement entouré d'au moins quatre éléments chauffants à induction adjacents, **caractérisée en ce qu'**une enveloppante convexe de l'ensemble d'éléments en ferrite au moins du premier élément chauffant à induction (10) présente plusieurs points de courbure (28) à courbure plus forte formant des extremums, qui sont régulièrement répartis sur le pourtour de l'élément chauffant à induction (10), une symétrie de la répartition correspondant à une symétrie du quadrillage.

7. Plaque de cuisson à induction selon la revendication 6, **caractérisée en ce que** l'enveloppante convexe de l'ensemble d'éléments en ferrite au moins d'un premier élément chauffant à induction (10) présente aux points d'intersection avec des droites de jonction (54) entre le centre du premier élément chauffant à induction et les centres des éléments chauffants à induction adjacents, à chaque fois, un maximum radial.

8. Plaque de cuisson à induction selon l'une des revendications 6 et 7, **caractérisée en ce que** l'enveloppante convexe de l'ensemble d'éléments en ferrite présente une symétrie hexagonale.
